(19) Europäisches Patentamt
European Patent Office
Office européen des brevets

(11) EP 0 512 394 B1

## (12) EUROPEAN PATENT SPECIFICATION

(45) Date of publication and mention
of the grant of the patent:
**05.03.1997 Bulletin 1997/10**

(51) Int Cl.6: **G01N 30/72, H01J 49/04**

(21) Application number: **92107307.8**

(22) Date of filing: **29.04.1992**

(54) **Method and apparatus for analyzing sample solutions**

Verfahren und Vorrichtung zum Analysieren von Probenlösungen

Procédé et dispositif pour l'analyse d'échantillons en solution

(84) Designated Contracting States:
**DE FR GB**

(30) Priority: **02.05.1991 US 694703**

(43) Date of publication of application:
**11.11.1992 Bulletin 1992/46**

(73) Proprietor: **WATERS INVESTMENTS LIMITED**
**Wilmington, Delaware 19805 (US)**

(72) Inventors:
• **Jarrell, Joseph A.**
**Newton Highlands, Massachusetts 02161 (US)**
• **Tomany, Michael**
**Thompson, Connecticut 06277 (US)**
• **Gabeler, Stephen C.**
**Sudbury, Massachusetts 01776 (US)**

(74) Representative: **Henkel, Feiler, Hänzel & Partner**
**Möhlstrasse 37**
**81675 München (DE)**

(56) References cited:
DE-A- 3 913 763        US-A- 4 570 068
US-A- 4 883 958        US-A- 4 980 057

## Description

### BACKGROUND OF THE INVENTION

This invention relates to a process and system for analyzing solutes in a sample solution by atomizing the solution and detecting the solute in the atomized particles. The system comprises an atomizer which utilizes ultrasonic excitation to form a standing wave on a liquid surface. The particle size distribution of the atomized liquid is relatively insensitive to liquid density and liquid surface tension.

At the present time apparatus are available for atomizing a sample solution such as a liquid stream effluent from a liquid chromatography separation step and subsequently analyzing the atomized liquid such as by mass spectrometry. Presently available means for analyzing small sample solutions include infrared spectroscopy and mass spectrometry. In electron impact mass spectrometry procedures, for example, the mass spectra of a sample is generated by ionizing the sample, determining the mass spectrum of the ionized sample and comparing the generated mass spectrum with reference mass spectra to determine the identity of the sample. In order to promote accuracy of the procedure, only the mass spectrum of one species should be generated at a given time.

In a liquid chromatograph, a stream of solvent, containing a mixture of chemical species in solution, is passed at elevated pressure through a chromatographic column. The column is so designed that it separates the mixture, by differential retention on the column, into its component species. The different species then emerge from the column as distinct bands in the solvent stream, separated in time. The liquid chromatograph provides therefore, an ideal device for the introduction into a mass spectrometer of single species, separated from initially complex mixtures.

In order for the species emerging from the column to be introduced into a mass spectrometer, removal of solvent from the dissolved species is desirable. This allows the ionization chamber of the mass spectrometer to operate at normal operating pressures (e.g., $1.33 \cdot 10^{-3}$ to $0.133 \cdot 10^{-3}$ Pa for electron impact ionization; 133 Pa for chemical ionization; $1.33 \cdot 10^{-3}$ Pa for atomic impact ionization); and it allows normal ionization modes, such as electron or atomic impact, or chemical to be used. Without efficient solvent removal from the species entering the ionization chamber of the mass spectrometer, hybrid and less well characterized mass spectra are produced.

In many systems for interfacing a liquid chromatograph to mass spectrometers, it is necessary to generate aerosols from the liquid chromatography liquid effluent to produce liquid particles having a relatively uniform size and within a count mean diameter of between about 5 and 30 μm (microns). If the particles are too small, it is difficult to separate the solid particles produced therefrom after the solvent evaporates from the vaporous solvent. If the particles are too large, the solvent is incompletely evaporated and gravity force will divert them from their intended path. The count mean diameter is defined as the particle size within the aerosol for which half the total number of aerosol particles is larger and the other half is smaller.

An additional problem in forming aerosols from the effluent stream from a liquid chromatography (LC) process is that the LC process must be capable of accomodating a wide variety of solvents so that a wide variety of solutes having different solubility characteristics can be processed. These solvents have different density and surface tension characteristics which affect liquid particle size of an aerosol formed under a given set of energy conditions.

It has been proposed in US-A- 4,629,478 4,687,929 and 4,752,995 to utilize a nebulizer for producing aerosol particles from an LC Column for subsequent introduction into a mass spectrometer. The nebulizer forms liquid particles from a jet or liquid issuing from a nozzle orifice. The diameter of the orifice and tne velocity of the jet are controlled so that the jet breaks up into monodisperse liquid particles. Unfortunately, the performance of this nebulizer is dependent upon the density and surface tension characteristics of the liquid jet and it is difficult to produce consistently monodispense aeorsols from the variety of solvents utilized in LC. These nebulizers are unstable and require frequent adjustment. An alternative system is disclosed in US-A- 4,383,171, although no specific nebulizer is disclosed.

An alternative means for forming aerosols from an LC effluent stream is disclosed in GB-A-2,203,241 which utilizes a capillary tube to form a liquid jet in combination with heating means to heat liquid particles formed from the jet in order to vaporize the solvent in the particles.

Nebulizer devices also are utilized to form aerosols in a wide variety of applications, particularly in applications where liquid fuels are to be burned. It is more efficient to form aerosols from the liquid fuel to increase the surface area of the fuel so as to effect more complete combination. Generally, these nebulizers are utilized with a petroleum fraction having relatively uniform density and surface tension characteristics. Examples of such nebulizers are disclosed in US-A-4,153,201 4,352,459 and 4,723,708.

As disclosed in US-A- 4,980,057 and in the 38th ASMS Conference on Mass Spectrometry and Allied Products, pages 1222-1223, a system is provided for analyzing sample solutions comprising an ultrasonic nebulizer and a mass spectrometer. The liquid sample is introduced into the nebulizer orthogonally to the tip of the ultrasonic horn in the nebulizer and orthogonally to a helium stream which is introduced axially into the nebulizer through an axial conduit within the ultrasonic horn. Thus, the helium stream is positioned within the liquid sample stream and the liquid sample stream is fractured to form an aerosol by a combination of pneumatic and ultrasonic forces. The nebulizer is operated at subatmospheric pressures. Such operation causes "bumping" or surging of solvent which can disrupt the nebulizer operation. In this system the liquid sample effluent conduit must be accurately aligned relative to the ultrasonic horn in contrast to introducing the liquid axially through the ultrasonic horn where proper alignment is inherent. During use, the liquid sample effluent conduit will become misaligned which requires periodic adjustment of the conduit's position. In addition, the use of a gas stream to intimately mix with the liquid sample stream rather than enclosing the liquid sample stream is undesirable since this mode of operation increases the probability that the liquid particles will impact with the apparatus wall and will be lost from downstream analysis.

Finally, prior art document US-A-4 570 068 discloses an interface for a liquid chromatograph and a mass spectrometer. This interface is an Atmospheric Pressure Chemical Ionization ("APCI") interface whose basic function is to generate a liquid aerosol for ionization. In the known interface, a liquid chromatograph (LC) effluent is introduced axially through a nebulizer and brought into contact with a jet of hot inert gas which impacts the nebulized liquid stream at right angles. In this way, liquid particles are produced which are subsequently ionized in a corona discharge.

It is an object of the invention to provide a system and a process for forming an aerosol from the liquid effluent of an LC apparatus, regardless of solvent used in the stream. This would substantially reduce downtime of the LC system to permit adjustment of the nebulizer when the LC stream solvent is changed. Such a system would be capable of producing aerosols having a relatively uniform droplets distribution.

The above object is solved by a system and a process as specified in claims 1 and 4, respectively.

## SUMMARY OF THE INVENTION

The system for analyzing the liquid effluent of an LC apparatus includes an ultrasonic nebulizer to form a aerosol from the effluent, means for desolvating the aerosol droplets and analyzing means. The ultrasonic nebulizer comprises means for delivering the effluent to a small column where ultrasonic vibrations are generated to form capillary waves which are fractured to form an aerosol. The aerosol is heated with a gas stream which encloses the aerosal to vaporize solvent in the aerosol droplets thereby to form dry particles which are directed to an analyzing means such as a mass spectrometer. This system has the advantage of relative independence of sensitivity of response to mobile phase composition and flow rate. This independence is achieved without the need for nebulizer optimization as flow rate or composition are varied. In addition this system is operable at flow rates as low as 50 $\mu\ell$/min which is the rate of flow in microbore and capillary liquid chromatography.

## BRIEF DESCRIPTION OF THE DRAWINGS

Fig. 1 is a schematic view of the system of this invention.

Fig. 2 is a cross sectional view of an ultrasonic nebulizer which is used in the system of this invention.

Fig. 3 shows the system response to a series of rotenone injections ranging from 2.5 ng to 400 ng.

Fig. 4 is a plot of the data of Fig. 3.

Fig. 5 shows the relative insensitivity of the system of this invention to flow variations.

## DESCRIPTION OF SPECIFIC EMBODIMENTS

In the system of this invention, the liquid effluent from a liquid chromatography separation process is directed to an ultrasonic nebulizer as a narrow stream. An ultrasonic nebulizer operates at a frequency above the limit of human hearing (16-20 kHz). In this invention, the ultrasonic nebulizer is operated at a frequency between about 50 and 760 kHz, preferably between about 100 and 140 kHz. If operated above this frequency range the particles are too small to be separated from a gas stream. If operated below this frequency range, the liquid particles are separated by gravity. In comparison to other available nebulizers of the prior art, the function of the ultrasonic nebulizer to produce monodisperse aerosol droplets is relatively insensitive to liquid surface tension and liquid denisty. The aerosol particle size produced with an ultrasonic nebulizer is defined by the expression:

$$CMD = \left( \frac{V}{P_L \, f^2} \right)^{1/3}$$

wherein V is the liquid surface tension, $P_L$ is the liquid density, f is the excitation frequency and CMD is the count mean diameter. As is evident from the above expression the aerosol particle distributions vary only as the 1/3 power of the liquid surface tension and liquid density. Thus, the ultrasonic nebulizer is relatively immune to the need for adjustment or loss of sensitivity as a function of solvent composition. The resulting aerosol is enhanced by a heated gas stream under conditions to confine the aerosol as a stream of particles and to heat the particles to evaporate the solvent and to form solid particles comprising the solute. The evaporated solvent is separated from the solid particles and the solid particles are directed into an analyzing step such as mass spectrometry or infrared spectroscopy.

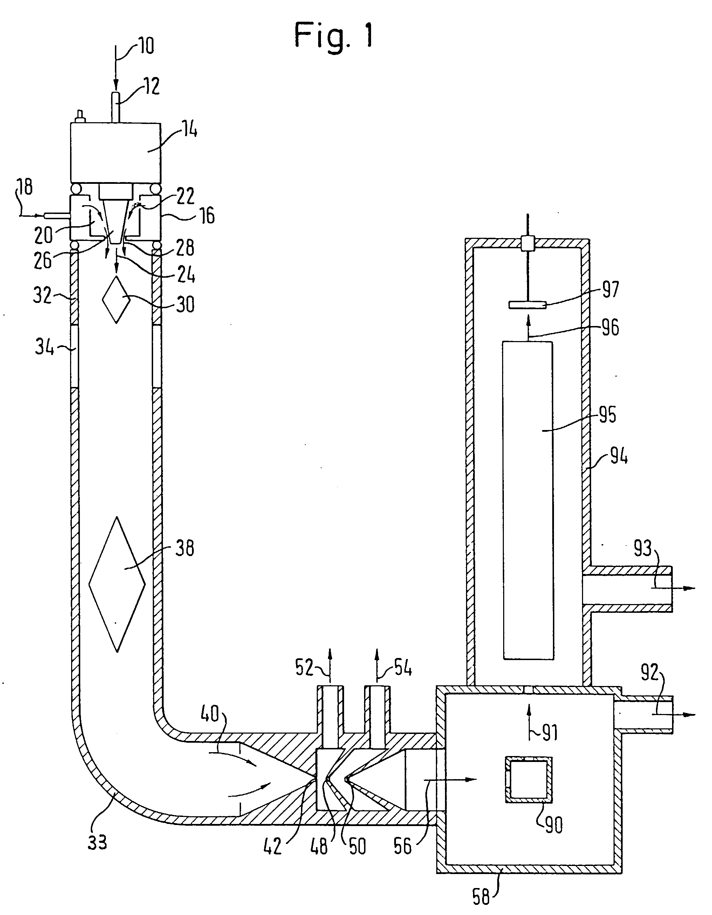

Referring to Figure 1, an effluent stream 10 from an LC Column (not shown) enters a conduit 12 within an ultrasonic nebulizer 14. The pressure within the nebulizer 14 is at atmospheric or superatmospheric. A hot inert gas such as helium enters plenum 16 through a conduit 18 and then enters inner plenum 20 through openings 22. The liquid stream is converted to liquid droplets 24 at the exit of nebulizer tip 26 where they contact the hot inert gas exiting from an opening 28 which surrounds nebulizer tip 26. The hot inert gas does not serve to form the aerosol but rather serves to heat and enclose the liquid aerosol to evaporate solvent and to minimize contact of the aerosol with the walls of the chamber 32. The solvent in the liquid droplets evaporates to form partially desolvated particles 30 within chamber 32 which is supplied with windows 34, if desired. The chamber 32 can be provided with a bend 33 which contacts large solvent particles which may be formed within the nebulizer 14 and are incapable of following the path of the bend 33 due to inertia.

Heat can be provided to the interior of the chamber 32 by external heaters (not shown) in order to accelerate solvent vaporization. The partially desolvated particles 30 are converted to solid particles 38 due to solvent evaporation. The desolvated particles are light enough that they are entrained by the gas/solvent vapor flow 40. Gas, solvent vapor, and particles flow out of the desolvation chamber 32 through orifice 42 from which they emerge in the form of a jet. The gas/particle/solvent vapor jet then passes through a series of pumped skimmers. The gas and solvent vapor molecules, having a higher diffusivity, spread out perpendicular to the axis of jet flow faster than do the particles. The jet then passes through orifices 48 and 50 which are in the tips of cones. This process thus enriches the particle density relative to the solvent vapor/gas stream. The excess gas and vapor (and some particles) are pumped out by external pumps (not shown) through port 52 and port 54. Finally the emergent particle beam 56 enters the ionization chamber 58 and into the electron impact ionization region 90 to produce an analyzed ion beam 91. A pump out port 92 is provided for the ionization chamber 58. The beam 91 enters analyzer chamber 94 and enters mass analyzer 95 to produce analyzed ion beam 96 which impacts ion detector 97. Analyzer chamber 94 is provided with pump out port 93.

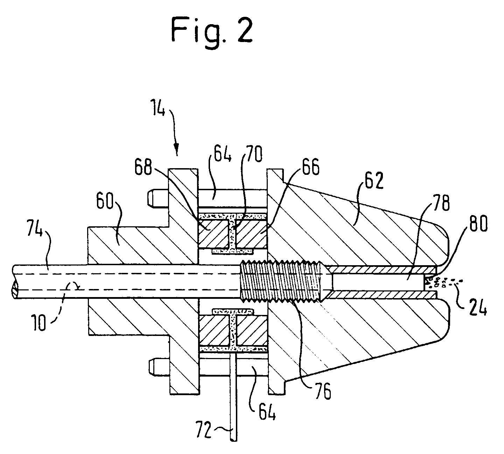

Referring to Figure 2, the ultrasonic nebulizer 14 includes a rear section 60 bolted to a nebulizer tip 62 by means of bolts 64. The piezoelectric driving elements 66 and 68 and electrode 70 are positioned between rear section 60 and tip 62 and are connected by electrical lead 72. Tube 74 is provided with a thread 76 which mates with a central thread in tip 62. Tube 74 is provided with a central conduit 10 through which the LC liquid stream passes. The LC liquid stream passes through conduit 78 within tip 62 where it is vibrated to form waves at the liquid surface 80 to produce droplets 24.

The following examples illustrate the present invention and are not intended to limit the same.

Example I

This example will be described with reference to Figs. 1 and 2. A nebulizer having a conduit 78 of about 15mm in length and a diameter of 0.76mm was vibrated at a frequency of 120 kHz. A series of rotenone injections of between 2.5 ng and 400 ng in 90/10 v/v of $CH_3CN/H_2O$ was directed to the nebulizer from a liquid chromatography step at a rate of 0.4 ml/min. The desolvation chamber 32 was maintained at $6,9 \cdot 10^3$ Pa (1 psi) at 66°c with a helium flow rate of 2.7 liters/min. The mass spectrometer vacuum system was differentially pumped. The electron impact ionizer 90 was at 242°C in the chamber 58 at a pressure of $2,66 \cdot 10^{-3}$ Pa (2.0 x $10^{-5}$ Torr). The mass analyzer 95 was in contiguous chamber 94 at a pressure of $81,32 \cdot 10^{-6}$ Pa (6.1 x $10^{-7}$ Torr).

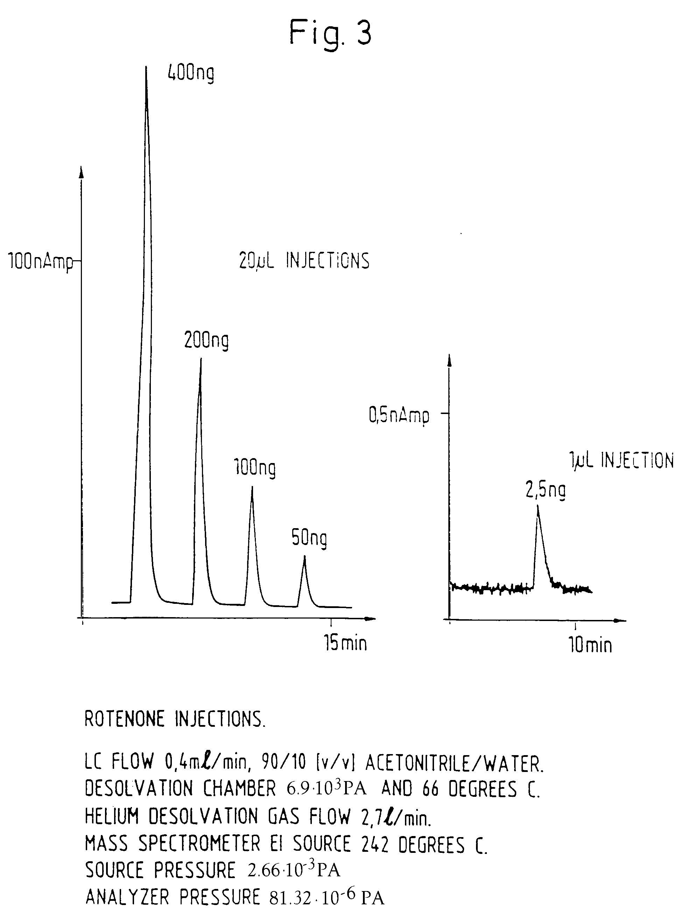

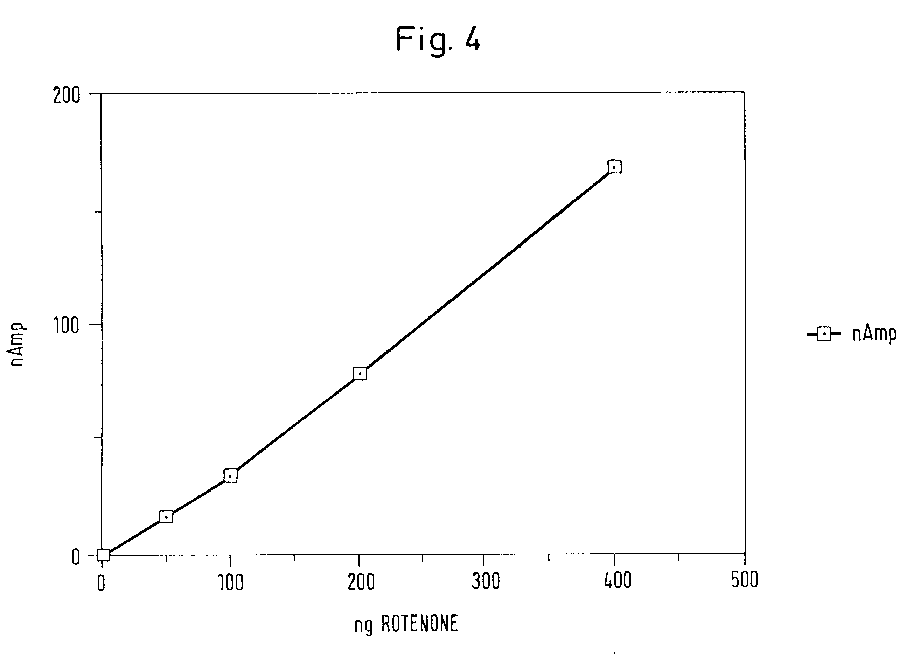

Together, Figs. 3 and 4 demonstrate the sensitivity and linearity of the system of this invention. The vertical axis on each of these figures is in nanoamperes (nAmp) which is a somewhat arbitrary measure of system response. In practice, however, mass spectrometers are extremely difficult to calibrate absolutely and are therefore virtually always calibrated against external standards. Thus what is important with regard to the sensitivity is the minimum detectable amount with respect to background noise which, from Figures 3 and 4 can clearly be less than lng for rotenone.

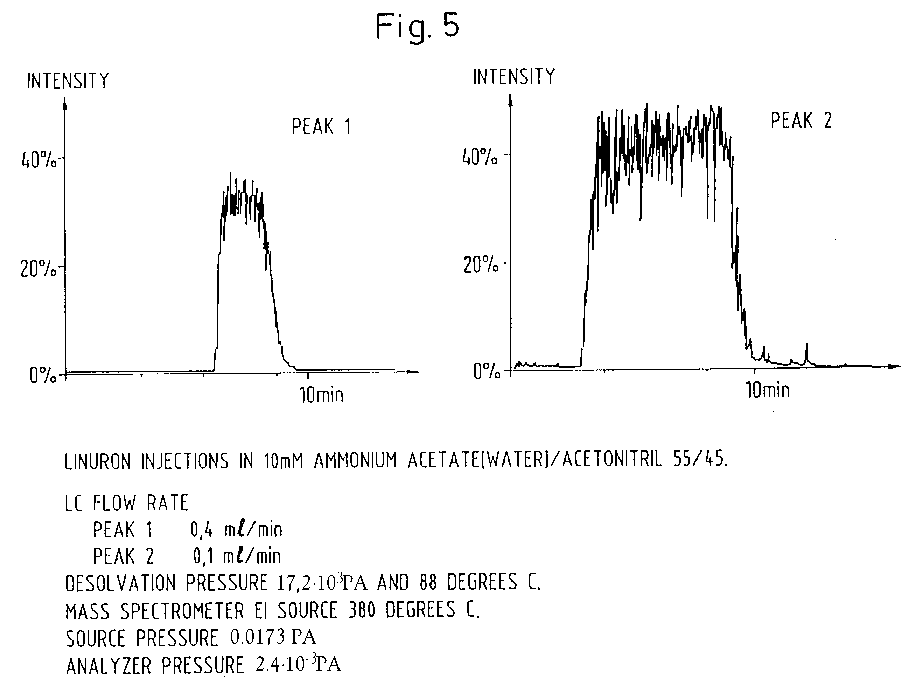

Figure 5 shows the relative insensitivity of the system to flow variations. Peak 1 is the response to an infusion of 1333 ng/s of linuron at 0.4 ml/min. Peak 2 is the response to an infusion of 1333 ng/s of linuron at 0.1 ml/min. The response variation is less than 35% despite a 4 times change in flow rate.

**Claims**

1. A system for analyzing a liquid sample (10) comprising an effluent of a liquid chromatography column which comprises,

   an ultrasonic nebulizer (14) capable of vibrating at a frequency between about 50 kHz and 760 kHz to form a liquid aerosol; and
   conduit means (12) for introducing said liquid sample (10) axially into said nebulizer (14) thereby to be converted to said liquid aerosol;

   characterized by further comprising:

   means (18, 20, 22) for converting said liquid aerosol to a solid aerosol by evaporating solvent of said liquid aerosol with a heated gas stream;
   skimmer means for separating said solid aerosol from said evaporated solvent;
   means (58) to ionize constituent molecules of said solid aerosol thus producing an ion beam;
   means (94, 95) for analyzing said ion beam; wherein:
   the heated gas stream is maintained at a pressure of at least atmospheric pressure which surrounds and contacts said liquid aerosol; and a bent chamber (33) for capturing liquid particles larger than said solid aerosol is positioned after said means (18, 20, 22) for converting said liquid aerosol to a solid aerosol.

2. The system of claim 1, characterized in that said liquid sample comprises the effluent of a liquid chromatography column.

3. The system of claim 1 or 2, characterized in that said means (94, 95) for analyzing comprises a mass spectrometer.

4. A process for analyzing a liquid sample comprising steps of:

introducing said sample axially into an ultrasonic nebulizer (14) thereby forming a liquid aerosol;
heating said liquid aerosol to evaporate solvent of said liquid aerosol with a heated gas stream at a pressure of at least atmospheric pressure surrounding and contacting said liquid aerosol to convert said liquid aerosol to a solid aerosol;
separating liquid particles larger than said solid aerosol from said solid aerosol;
separating evaporated solvent from said solid aerosol with a skimmer (44, 46);
ionizing constituent molecules of said solid aerosol thus producing an ion beam; and
analyzing said ion beam.

5. The process of claim 4, characterized in that said liquid sample comprises the effluent of a liquid chromatography column.

6. The process of claim 4, characterized in that said ion beam is analyzed by mass spectrometry.

**Patentansprüche**

1. System zum Analysieren einer flüssigen Probe (10) mit einem Abfluß einer Flüssigchromatographiesäule, umfassend:

einen Ultraschallzerstäuber (14), der bei einer Frequenz zwischen etwa 50 kHz und 760 kHz zu schwingen vermag, um ein flüssiges Aerosol zu bilden, und
eine Leitungseinrichtung (12) zum axialen Einführen der flüssigen Probe (10) in den Zerstäuber (14), um dadurch in das flüssige Aerosol umgewandelt zu werden,

gekennzeichnet durch weiterhin:

eine Einrichtung (18, 20, 22) zum Umwandeln des flüssigen Aerosols in ein festes Aerosol durch Verdampfen des Lösungsmittels des flüssigen Aerosols mit einem erwärmten Gasstrom,
eine Skimmereinrichtung zum Trennen des festen Aerosols von dem verdampften Lösungsmittel,
eine Einrichtung (58) zum Ionisieren von Bestandteilmolekülen des festen Aerosols, um so einen Ionenstrahl zu erzeugen,
eine Einrichtung (94, 95) zum Analysieren des Ionenstrahles, wobei:
der erwärmte Gasstrom bei einem Druck von wenigstens Atmosphärendruck gehalten wird, welcher das flüssige Aerosol umgibt und berührt, und
eine Biegungskammer (33) zum Einfangen von flüssigen Teilchen, die größer als das feste Aerosol sind, hinter der Einrichtung (18, 20, 22) zum Umsetzen des flüssigen Aerosols in ein festes Aerosol gelegen ist.

2. System nach Anspruch 1, dadurch gekennzeichnet, daß die flüssige Probe den Abfluß einer Flüssigchromatographiesäule umfaßt.

3. System nach Anspruch 1 oder 2, dadurch gekennzeichnet, daß die Einrichtung (94, 95) zum Analysieren ein Massenspektrometer umfaßt.

4. Verfahren zum Analysieren einer flüssigen Probe mit den folgenden Schritten:

axiales Einführen der Probe in einen Ultraschallzerstäuber (14), um dadurch ein flüssiges Aerosol zu bilden,
Erwärmen des flüssigen Aerosols, um ein Lösungsmittel des flüssigen Aerosols zu verdampfen, mit einem erwärmten Gasstrom bei einem Druck von wenigstens Atmosphärendruck, der das flüssige Aerosol umgibt und kontaktiert, um das flüssige Aerosol in ein festes Aerosol umzuwandeln,
Trennen von flüssigen Teilchen, die größer als das feste Aerosol sind, von dem festen Aerosol,
Trennen des verdampften Lösungsmittels von dem festen Aerosol in einem Skimmer oder Abstreicher (44, 46), Ionisieren von Bestandteilmolekülen des festen Aerosols, um so einen Ionenstrahl zu erzeugen, und
Analysieren des Ionenstrahles.

5. Verfahren nach Anspruch 4, dadurch gekennzeichnet, daß die flüssige Probe den Abfluß einer Flüssigchromatographiesäule umfaßt.

6. Verfahren nach Anspruch 4, dadurch gekennzeichnet, daß der Ionenstrahl durch Massenspektrometrie analysiert wird.

## Revendications

1. Système pour analyser un échantillon liquide (10) comprenant un effluent d'une colonne de chromatographie liquide, qui comprend

   un nébuliseur ultrasonique (14) apte à vibrer à une fréquence entre environ 50 kHz et 760 kHz pour former un aérosol liquide ; et
   des moyens de conduite (12) pour introduire ledit échantillon liquide (10) axialement dans ledit nébuliseur (14) pour le transformer ainsi en ledit aérosol liquide ;

   caractérisé en ce qu'il comprend en outre :

   des moyens (18, 20, 22) pour transformer ledit aérosol liquide en un aérosol solide en évaporant le solvant dudit aérosol liquide avec un courant de gaz chauffé ;
   des moyens d'écrémage (« skimmer means ») pour séparer ledit aérosol solide dudit solvant évaporé ;
   des moyens (58) pour ioniser les molécules constituant ledit aérosol solide en produisant ainsi un faisceau d'ions ;
   des moyens (94, 95) pour analyser ledit faisceau d'ions ; dans lequel :
   le courant de gaz chauffé est maintenu à une pression d'au moins la pression atmosphérique et entoure et entre en contact avec ledit aérosol liquide ; et
   une chambre coudée (33) pour capturer les particules liquides plus grandes que ledit aérosol solide est placée après lesdits moyens (18, 20, 22) pour transformer ledit aérosol liquide en un aérosol solide.

2. Système selon la revendication 1, caractérisé en ce que ledit échantillon liquide comprend l'effluent d'une colonne de chromatographie liquide.

3. Système selon la revendication 1 ou 2, caractérisé en ce que lesdits moyens (94, 95) pour analyser comprennent un spectromètre de masse.

4. Procédé pour analyser un échantillon liquide, comprenant les étapes consistant à :

   introduire ledit échantillon axialement dans un nébuliseur ultrasonique (14), formant ainsi un aérosol liquide ;
   chauffer ledit aérosol liquide pour évaporer le solvant dudit aérosol liquide avec un courant de gaz chauffé à une pression d'au moins la pression atmosphérique entourant et entrant en contact avec ledit aérosol liquide pour transformer ledit aérosol liquide en un aérosol solide ;
séparer dudit aérosol solide les particules liquides plus grandes que ledit aérosol solide ;
séparer le solvant évaporé dudit aérosol solide avec un écrémeur (« skimmer ») (44, 46) ;
ioniser les molécules constituant ledit aérosol solide en produisant ainsi un faisceau d'ions ; et à
analyser ledit faisceau d'ions.

5. Procédé selon la revendication 4, caractérisé en ce que ledit échantillon liquide comprend l'effluent d'une colonne de chromatographie liquide.

6. Procédé selon la revendication 4, caractérisé en ce que ledit faisceau d'ions est analysé par spectrométrie de masse.

# Fig. 1

# Fig. 2

# Fig. 3

ROTENONE INJECTIONS.

LC FLOW 0,4mℓ/min, 90/10 [v/v] ACETONITRILE/WATER.
DESOLVATION CHAMBER $6.9 \cdot 10^3$ PA AND 66 DEGREES C.
HELIUM DESOLVATION GAS FLOW 2,7ℓ/min.
MASS SPECTROMETER EI SOURCE 242 DEGREES C.
SOURCE PRESSURE $2.66 \cdot 10^{-3}$ PA
ANALYZER PRESSURE $81.32 \cdot 10^{-6}$ PA

Fig. 4

EP 0 512 394 B1

# Fig. 5

LINURON INJECTIONS IN 10mM AMMONIUM ACETATE(WATER)/ACETONITRIL 55/45.

LC FLOW RATE
    PEAK 1    0,4 m$\ell$/min
    PEAK 2    0,1 m$\ell$/min
DESOLVATION PRESSURE $17,2 \cdot 10^3$PA AND 88 DEGREES C.
MASS SPECTROMETER EI SOURCE 380 DEGREES C.
SOURCE PRESSURE 0.0173 PA
ANALYZER PRESSURE $2.4 \cdot 10^{-3}$PA

EP 0 512 394 B1